# EUROPÄISCHE PATENTSCHRIFT

(11) **EP 3 555 502 B1**
(45) Veröffentlichungstag und Bekanntmachung des Hinweises auf die Patenterteilung: **11.11.2020**
(21) Anmeldenummer: 17808830.8
(22) Anmeldetag: 21.11.2017
(51) Int. Cl.: F16J 9/08, F04B 53/14, F16J 15/24

(54) **KOLBENRING FÜR EINEN KOLBENVERDICHTER SOWIE KOLBENVERDICHTER**
PISTON RING FOR A PISTON COMPRESSOR AND PISTON COMPRESSOR
SEGMENT DE PISTON POUR UN COMPRESSEUR À PISTON ET COMPRESSEUR À PISTON

(30) Priorität: 13.12.2016 EP 16203902
(43) Veröffentlichungstag der Anmeldung: 23.10.2019
(73) Patentinhaber: Burckhardt Compression AG, 8404 Winterthur (CH)
(72) Erfinder: FEISTEL, Norbert, 8548 Ellikon a.d. Thur Zürich (CH)
(74) Vertreter: Dr. Graf & Partner AG
(86) Internationale Anmeldenummer: PCT/EP2017/079859
(87) Internationale Veröffentlichungsnummer: WO 2018/108464

(56) Entgegenhaltungen:
- EP-A2- 1 146 264
- WO-A1-98/55783
- WO-A2-2007/089924
- DE-U1-202015 100 869
- US-A- 3 145 629

## Beschreibung

Die Erfindung betrifft einen Kolbenring für einen Kolbenverdichter gemäss dem Oberbegriff von Anspruch 1. Die Erfindung betrifft zudem einen Kolbenverdichter.

### Stand der Technik

Kolbenverdichter umfassend einen Zylinder sowie einen darin linear beweglichen Kolben sind bekannt. In einer möglichen Ausgestaltung ist am Kolben ein Kolbenring angeordnet, wobei der Kolbenring entlang der Zylinderwand gleitet, sodass der Kolbenring den durch den Zylinder und den beweglichen Kolben begrenzten Kompressionsraum abdichtet. Die Druckschrift WO 98/55783A1 offenbart einen trockenlaufenden Kolbenverdichter mit einem am Kolben angeordneten, an der Zylinderwand reibenden Kolbenring. Dieser trockenlaufende Kolbenverdichter ist beispielsweise zum Verdichten von Wasserstoff auf einen Enddruck von bis zu 200 bar gut geeignet. Es besteht jedoch ein zunehmender Bedarf Fluide auf noch höhere Enddrücke zu komprimieren. Der bekannte Kolbenring ist für den Einsatz bei hohen Druckdifferenzen jedoch nur bedingt geeignet, da dieser unter Belastung ein ausgeprägtes Kaltfliessen aufweisen, was einen schnellen Verschleiss des Kolbenrings zur Folge hat. Der bekannte Kolbenring ist somit nur beding geeignet für Kompressoren mit einem hohen Enddruck von über 200 bar.

### Darstellung der Erfindung

Aufgabe der Erfindung ist es einen Kolbenring sowie einen Kolbenverdichter auszugestalten, der vorteilhaftere Betriebseigenschaften aufweist.

Diese Aufgabe wird gelöst mit einem Kolbenring aufweisend die Merkmale von Anspruch 1. Die abhängigen Ansprüche 2 bis 8 betreffen weitere, vorteilhafte Ausgestaltungen der Erfindung. Die Aufgabe wird weiter gelöst mit einem Kolbenverdichter aufweisend die Merkmale von Anspruch 9. Die abhängigen Ansprüche 10 bis 12 betreffen weitere, vorteilhafte Ausgestaltungen. Die Aufgabe wird weiter gelöst mit einer Verwendung des erfindungsgemässen Kolbenrings in einem Kolbenverdichter zum Komprimieren eines Fluides auf einen Druck von mehr als 500 bar.

Die Aufgabe wird insbesondere gelöst mit einem Kolbenring umfassend einen endlosen Grundring sowie einen Dichtring, wobei der Grundring eine radial nach Aussen gerichtete Grundringstirnseite aufweist, und wobei der Dichtring eine radial nach Aussen gerichtete Dichtstirnseite und eine radial nach innen gerichtete, kreisförmig verlaufende Dichtringinnenseite aufweist, wobei der Dichtring drei tangentiale Schnitte aufweist, welche sich tangential zur Dichtringinnenseite erstrecken, sodass der Dichtring drei im einer Umfangsrichtung nacheinander folgend angeordnete, durch den tangentialen Schnitt getrennte Dichtringsegmente umfasst, wobei der endlose Grundring und der Dichtring in einer senkrecht zur Umfangsrichtung verlaufenden Längsrichtung nacheinander folgend angeordnet sind, wobei in Längsrichtung anschliessend an den Dichtring ein Deckring angeordnet ist, wobei der Deckring eine radial nach Aussen gerichtete Deckringaussenseite und eine radial nach innen gerichtete Deckringinnenseite aufweist,
wobei der Deckring auf der dem Dichtring abgewandten Seite zumindest einen radial verlaufenden Rückstromkanal aufweist, der sich in radialer Richtung entlang der gesamten Breite des Deckrings erstreckt, wobei die Dichtstirnseite in radialer Richtung über die Deckringaussenseite und die Grundringstirnseite vorsteht, und wobei der Grundring sowie der Deckring eine höhere Zugfestigkeit aufweisen als der Dichtring.

In einer bevorzugten Ausgestaltung ist die Zugfestigkeit des Grundrings sowie des Deckrings zumindest 1,5 Mal grösser als die Zugfestigkeit des Dichtrings.

Der erfindungsgemässe Kolbenring ist als ein sogenannter Sandwich-Kolbenring ausgestaltet und umfasst einen Dichtring sowie in axialer Richtung beidseitig angeordnete Stützringe, nämlich den Grundring und den Deckring, welche am Dichtring anliegen, wobei die Stützringe vorzugsweise plattenförmig ausgestaltet sind. Der Dichtring besteht, im Vergleich zum Grund- und Deckring, aus einem weicheren Material mit vorzugsweise gutem Formanpassungsvermögen, insbesondere einem guten Formanpassungsvermögen in radialer Richtung. Der Dichtring weist somit im Vergleich zum Grund- und Deckring eine tiefere Zugfestigkeit auf. Der Kolbenring umfasst in axialer Richtung auf der einen Seite den Grundring und auf der anderen Seite den Deckring, wobei der Grundring und der Deckring die beiden Stützringe ausbilden, sodass der Dichtring auf jeder Seite an je einem der genannten Ringe anliegt und durch diese gehalten ist. Der Grundring und vorzugsweise auch der Deckring sind endlos ausgestaltet und bestehen aus einem relativ festen Material, das heisst aus einem Material mit höherer Zugfestigkeit als der Dichtring. Der Dichtring aus relativ weichem Material bzw. einem Material mit geringerer Zugfestigkeit ist zwischen dem Grundring und dem Deckring gut und sicher gehalten und weist in radialer Richtung ein gutes Formanpassungsvermögen auf, sodass dieser gut dichtend an der Innenwand des Kolbens anliegt und dadurch eine allfällig auftretende Leckage verhindert oder reduziert.

Beim erfindungsgemässen Kolbenring ist der Dichtring als ein Reibdichtelement ausgestaltet, indem der Dichtring entlang der Zylinderinnenwand gleitet, wobei der Kolbenring trockenlaufend oder geschmiert betrieben werden kann. Der erfindungsgemässe Kolbenring ist vorzugsweise in Kombination mit Kolbenverdichtern geeignet, deren Kompressionsraum eine hohe Druckbelastung von vorzugsweise mehr als 500 bar und/oder eine hohe Temperaturbelastung aufweisen.

Besonders bevorzugt weist der Dichtring in axialer Richtung eine schmale Bauhöhe auf, vorzugsweise eine Bauhöhe im Bereich von 1 bis 6 mm. Der erfindungsgemässe Kolbenring wird derart im Kolbenverdichter montiert, dass sowohl der Grundring als auch der Deckring zumindest im kalten Zustand einen kleinen Spalt zwischen der radial nach Aussen gerichteten Seite und der Zylinderinnenseite aufweisen, beispielsweise einen Spalt von wenigen Zehntel Millimeter bis wenigen Hundertstel Millimeter. Der Dichtring steht dagegen in radialer Richtung über den Grundring und den Deckring vor, und berührt die Zylinderinnenseite. In einer vorteilhaften Ausgestaltung kommen der Grundring und der Deckring während des Betriebs nicht mit der Zylinderinnenseite in Berührung und bilden somit keine Reibringe aus. Bei dieser Ausgestaltung müssen sowohl der Grundring als auch der Deckring keine Trockenlaufeigenschaften aufweisen.

Im Gegensatz zum Grundring, welcher auf der dem Verdichtungsraum abgewandten Seite angeordnet ist, weist der Deckring auf der dem Verdichtungsraum zugewandten Seite zudem zumindest eine Rückströmnut auf, die während der Rückexpansion den Druckabbau in den Verdichtungsraum ermöglicht. Der Grundring und der Deckring, welche beidseitig des Dichtrings angeordnet sind, verhindern somit auf beiden Seiten des Dichtrings, dass dieser durch die dynamisch wirkenden, in beiden Richtungen der Bewegungsrichtung des Kolbens angreifenden Druckkräfte zerstört wird. Die Rückexpansion kommt wie nachfolgend beschrieben zustande. Durch die Leckagen zwischen den einzelnen Dichtelementen eines Dichtsystems entstehen bei der Belastung mit einem sich zeitlich ändernden Druckverlauf auch Druckdifferenzen in Richtung des Verdichtungsraums. So steigt während der Verdichtungsphase der Druck in den unmittelbar auf den Verdichtungsraum folgenden Dichtelementkammern auf Werte oberhalb des Saugdruckniveaus an und kann - abhängig von Verschleisszustand der Dichtelemente - nahezu den Verdichtungsenddruck erreichen. Sinkt der Druck im Zylinder dann während der Expansionsphase wieder in Richtung des Saugdrucks, so kommt es zu einer Druckentlastung zurück in den Verdichtungsraum, d.h. die Belastungsrichtung der Dichtelemente nahe dem Verdichtungsraum kehrt sich um.

Der erfindungsgemässe Kolbenring weist somit den Vorteil auf, dass der durch tangentiale Schnitte geschnittene Dichtring einerseits während dem Kompressionsvorgang durch den Grundring gestützt ist, und während dem Expansionsvorgang durch den Deckring gestützt ist, sodass der geschnittene Dichtring sowohl beim Kompressionsvorgang aber insbesondere auch beim Expansionsvorgang vor stark angreifenden Kräften und somit vor einer Beschädigung geschützt ist.

Durch die erfindungsgemässe Sandwich-Ausführung des Kolbenrings ist es möglich den Dichtring aus einem Kunststoffmaterial auszugestalten, das an sich in einer "selbsttragenden" Ausführungsform, das heisst ohne Stützringe, zum Abdichten von hohen Druckdifferenzen nicht geeignet wäre. Der erfindungsgemässe Kolbenring kann abhängig von dessen Ausgestaltung trockenlaufend oder ölgeschmiert betrieben werden. Bei einem trockenlaufenden Kolbenring muss zumindest der Dichtring Trockenlaufeigenschaften aufweisen. Falls der Grund- und/oder Deckring während des Betriebes ebenfalls entlang der Zylinderinnenwand gleiten, so sollten auch diese Stützringe Trockenlaufeigenschaften aufweisen. Der Dichtring ist vorzugsweise aus einem PTFE-Material oder einem Polymerblend gebildet, wobei bei sehr hohen Druckdifferenzen auch Hochtemperatur-Polymere verwendet werden. Trockenlaufende Dichtringe sind zudem gefüllt mit einem anorganischen Füllstoffen wie Kohle, Graphit, Glasfasern, MoS2 oder Bronze. Grund- und Deckring bestehen vorteilhafterweise aus Hochtemperatur-Polymer, Faserverbundmaterial sowie bei sehr hohen Druckdifferenzen aus Metall, wie beispielsweise Bronze.

Nachfolgend sind beispielhafte Materialkombinationen von Grundring, Dichtring und Deckring angegeben. Wie bereits erwähnt ist eine Voraussetzung, dass der Grundring sowie der Deckring eine bezüglich des Dichtrings höhere Zugfestigkeit aufweist. Abhängig von dem zu erzielenden Enddruck könnten beispielsweise die nachfolgenden Materialkombinationen geeignet sein, wobei Details bezüglich der verwendeten Materialien in Anschluss an die Tabelle angegeben sind:

**Tabelle 1, Beispiele von Materialkombinationen der Kolbenringe**

| | **Kolbenring 1** | **Kolbenring 2** | **Kolbenring 3** | **Kolbenring 4** |
|---|---|---|---|---|
| **Deckring** | Hochtemperatur polymer | Hochtemperaturpolymer | Faserverbundmaterial | Kupferlegierung (Bronze) |
| **Dichtring** | mod PTFE oder gefülltes PTFE | Polymerblend | Hochtemperatur polymer | Hochtemperatur polymer |
| **Grundring** | Hochtemperatur polymer | Hochtemperaturpolymer | Faserverbundmaterial | Kupferlegierung (Bronze) |

Nachfolgend Details zu den in Tabelle 1 verwendeten Materialien, wobei die nachfolgend angegebenen, gefüllten Materialien insbesondere bei trockenlaufenden Ringen erforderlich sind. Als **Hochtemperaturpolymer** ist beispielsweise reines oder gefülltes PEEK, reines oder gefülltes Polyimid, reines oder gefülltes PPS, oder reines oder gefülltes Epoxid geeignet.
Als **PTFE** ist beispielsweise ein modifiziertes PTFE, auch als "mod PTFE" bezeichnet, oder ein gefülltes PTFE gefüllt mit anorganischen Füllstoffen wie Kohle, Graphit, Glasfasern, MoS2 und/oder Bronze geeignet.

Als **Polymerblend** ist ein Gemischen aus zumindest zwei organischen Kunststoffen wie PTFE, PEEK, PPS geeignet, wobei der Polymerblend auch gefüllt sein kann mit einem anorganischen Füllstoff wie Kohle, Graphit, Glasfasern, MoS2 und/oder Bronze.
Als **Faserverbundmaterial** sind Kohlefasern in einer Matrix von beispielsweise PEEK oder Epoxid geeignet.
Als **Kupferlegierung** sind beispielsweise Bronzematerialien wie Aluminium-, Blei-, oder Zinnbronze sowie ein Material wie Messing geeignet.

Ein für den Dichtring sehr gut geeigneter Kunststoff ist Polytetrafluorethylen (PTFE), dem zur Verbesserung seiner physikalischen, mechanischen und/oder tribologischen Eigenschaften, insbesondere zum Verleih von Trockenlaufeigenschaften, vorzugsweise noch meist anorganische Füllstoffe, wie Kohle, Graphit, Glasfasern, etc. beigegeben sind. Trotz dieser Füllstoffe war der Einsatz von bisher bekannten Dichtringen aus PTFE aufgrund der ausgeprägten Kaltflussneigung von PTFE auf niedrige Druckdifferenzen begrenzt. Der erfindungsgemässe Kolbenring weist den Vorteil auf, dass ein Dichtring bestehend aus PTFE auch bei höheren Druckdifferenzen zuverlässig betrieben werden kann. Dies sei am nachfolgenden Beispiel eines trockenlaufenden "Kolbenring 1" erläutert. Der beispielhafte Kolbenring 1 umfasst einen Dichtring aus gefüllten PTFE, wobei das PTFE mit Kohle bzw. Graphit gefüllt ist. Ein solcher Dichtring weist bei einer Temperatur von 20°C eine Zugfestigkeit von 10MPa auf. Grund- und Deckring bestehen aus gefülltem PEEK. Ein solcher Grund- bzw. Deckring weist bei einer Temperatur von 250°C eine Zugfestigkeit von 18MPa auf. Bei diesem Ausführungsbeispiel kann der erfindungsgemässe Kolbenring im Trockenlauf problemlos bei 250°C betrieben werden, obwohl der Dichtring bei dieser Temperatur eine äusserst geringe Zugfestigkeit aufweist, da der Dichtring in axialer Richtung zwischen den Stützringen, d.h. zwischen dem Grund- und Deckring gehalten ist, und ein Entweichen des Dichtrings in radialer Richtung nicht möglich ist, da dieser in radialer Richtung an der Innenwand des Zylinders ansteht. Vorzugsweise beträgt der Abstand des Grund- bzw. Deckrings zur Innenwand des Zylinders wenige Zehntel bis wenige Hundertstel Millimeter.

Der beispielhafte "Kolbenring 1" kann auch bei einem ölgeschmierten Kolbenverdichter zur Abdichtung des Kompressionsraums verwendet werden. Dabei könnte der Dichtring beispielsweise aus modifiziertem PTFE und der Grund- und Deckring beispielweise aus reinem PEEK bestehen. Der Grund- und Deckring könnte beispielsweise auch aus einem gefüllten PEEK bestehen, wobei das das PEEK mit Kohlefasern (10 Gew.%), PTFE (10 Gew. %) und Graphit (10 Gew. %) gefüllt ist.

Für einen Kolben mit hoher Druck- und/oder Temperaturbelastung könnte wie oben am Beispiel mit "Kolbenring 3" und "Kolbenring 4" dargestellt, ein Kolbenring umfassend einen Dichtring bestehend aus einem Hochtemperatur-Polymer wie Polyetheretherketon (PEEK) oder Polyimid (PI) sowie umfassend ein Deck- und Grundring bestehend aus einem Faserverbundmaterial wie Kohlefasern in einer Matrix aus PEEK oder Kohlefasern in einer Matrix aus Epoxid verwendet werden.

Vor allem bei ölgeschmierten Kolbenverdichtern können Druckdifferenzen auch sehr hohe Werte von über 1000 bar annehmen, sodass wie oben mit "Kolbenring 4" dargestellt, insbesondere bei solchen Kolbenverdichtern auch Kolbenringe umfassend einen Grund- und Deckring aus einem einteiligen Metallring zum Einsatz kommen können.

Die Erfindung wird nachfolgend an Hand von Ausführungsbeispielen weiter im Detail beschrieben.

### Kurze Beschreibung der Zeichnungen

Die zur Erläuterung der Ausführungsbeispiele verwendeten Zeichnungen zeigen:
- Fig. 1: einen Längsschnitt einer an einem Kolben angeordneten Dichtungsanordnung;
- Fig. 2: eine Draufsicht auf einen Deckring;
- Fig. 3: eine Draufsicht auf einen Dichtring mit Spannring;
- Fig. 4: eine Draufsicht auf einen Grundring;
- Fig. 5: einen Längsschnitt durch ein zweites Ausführungsbeispiel einer Dichtungsanordnung;
- Fig. 6: eine Seitenansicht eines Kolbens mit einer Mehrzahl von Dichtungsanordnungen;
- Fig. 7: einen Längsschnitt durch ein drittes Ausführungsbeispiel einer Dichtungsanordnung;
- Fig. 8: eine Draufsicht auf einen Deckring.

Grundsätzlich sind in den Zeichnungen gleiche Teile mit gleichen Bezugszeichen versehen.

### Wege zur Ausführung der Erfindung

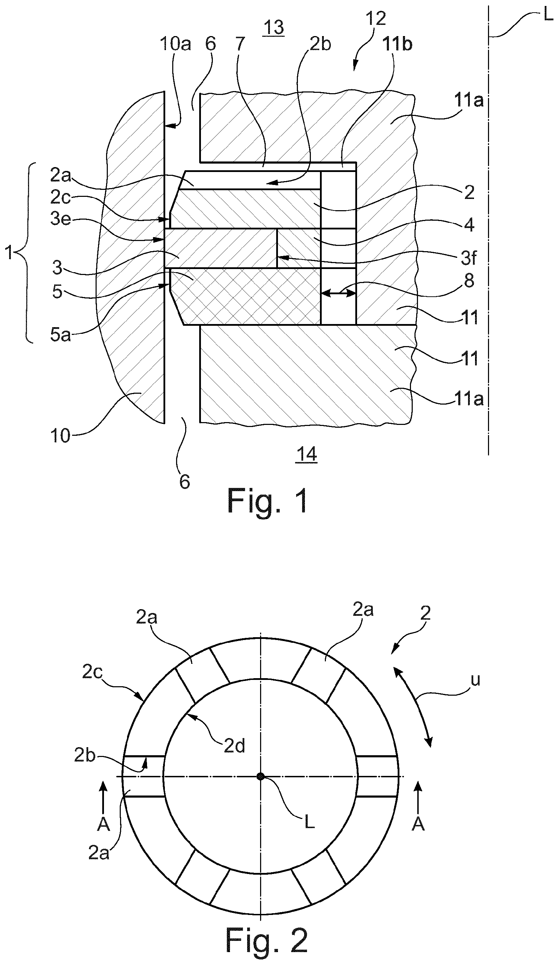

Fig. 1 zeigt einen Längsschnitt durch einen Kolbenverdichter umfassend einen Zylinder 10, einen Kolben 12 sowie zumindest einen im Kolben 12 angeordneten Kolbenring 1. Der Kolben 12 ist als sein gebauter Kolben ausgestaltet, und umfasst eine Mehrzahl von in einer Längsrichtung L nacheinander angeordneten Kolbenkörpern 11, wobei jeder Kolbenkörper 11 eine Kammerscheibe 11a aufweist, welche einen Innenraum 11b ausbildet. Im Innenraum 11b ist ein Kolbenring 1 angeordnet. In Figur 1 ist der Verdichtungsraum 13 des Kolbenverdichters oben angeordnet, und der Kurbelkasten, bzw. der Niederdruckteil 14 unten angeordnet. Der Kolbenring 1 umfasst einen Dichtring 3, einen Spannring 4, einen Deckring 2 sowie einen Grundring 5. Der Kolbenring 1 ist in zur Längsachse L radialer Richtung unter Ausbildung eines Innenspaltes 8 bezüglich der Kammerscheibe 11a beabstandet. Der Innenspalt 8 ist über einen radialen Rückstromkanal 2a und den oben angeordneten Aussenspalt 6 Fluid leitend mit einer in der dargestellten Ansicht weiter oben und nicht sichtbaren Raum verbunden.

Figur 2 zeigt eine Draufsicht auf den Deckring 2 aus der Richtung vom Verdichtungsraum 13 her. Der Deckring 2 umfasst eine radial nach aussen gerichtete Deckringaussenseite 2c sowie eine kreisförmig verlaufende, radial nach innen gerichtete Deckringinnenseite 2d. Der Deckring 2 ist als endloser Ring ausgestaltet und umfasst eine Mehrzahl von in Umfangsrichtung verteilt angeordneten, in radialer Richtung entlang der gesamten Breite des Deckrings 2 verlaufenden radialen Rückstromkanälen 2a.

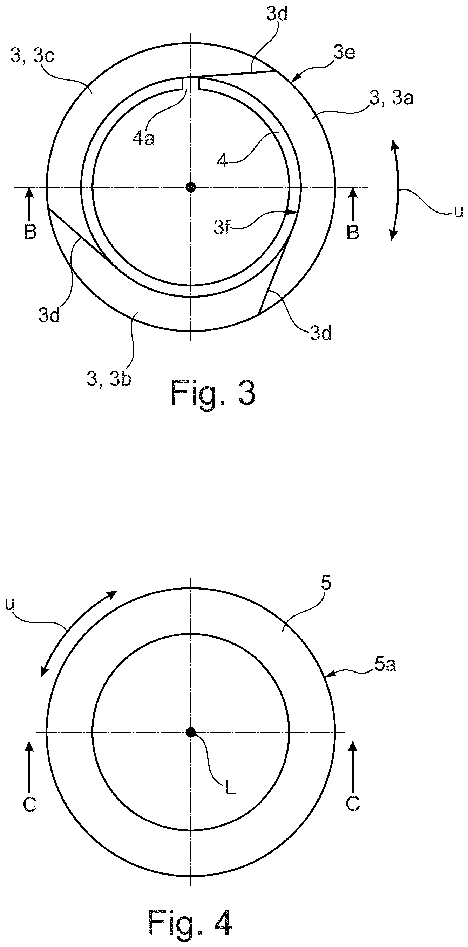

Figur 3 zeigt eine Draufsicht auf den Dichtring 3 aus der Richtung vom Verdichtungsraum 13 her. Der Dichtring 3 umfasst eine radial nach Aussen gerichtete Dichtstirnseite 3e und eine radial nach innen gerichtete, kreisförmig verlaufende Dichtringinnenseite 3f, wobei der Dichtring 3 drei tangentiale Schnitte 3d aufweist, welche sich tangential zur Dichtringinnenseite 3f erstrecken, sodass der Dichtring 3 drei im einer Umfangsrichtung U nacheinander folgend angeordnete, durch den tangentialen Schnitt 3d getrennte Dichtringsegmente 3a, 3b, 3c umfasst. Anliegend an die Dichtringinnenseite 3f ist vorteilhafterweise ein Spannring 4 aufweisend einen Spannringspalt 4a angeordnet. Der entlang der Dichtringinnenseite 3f anliegende Spannring 4 bewirkt eine radial nach Aussen gerichtete Kraft auf die Dichtringinnenseite 3f. Auf den Spannring 4 könnte auch verzichtet werden, wobei ein sich im Innenraum 11b befindliches Fluid eine radial nach Aussen gerichtete Kraft auf die Dichtringinnenseite 3f bewirken könnte.

Figur 4 zeigt eine Draufsicht auf den Grundring 5, der eine radial nach Aussen gerichtete Grundringstirnseite 5a aufweist.

Der endlose Grundring 5 und der Dichtring 3 sind in einer senkrecht zur Umfangsrichtung U verlaufenden Längsrichtung L nacheinander folgend angeordnet, wobei in Längsrichtung L anschliessend an den Dichtring 3 der endloser Deckring 2 angeordnet ist, sodass, wie in Figur 1 dargestellt, ein Kolbenring 1 ausgebildet ist, der Grundring 5, Dichtring 3 und Deckring 2 umfasst.

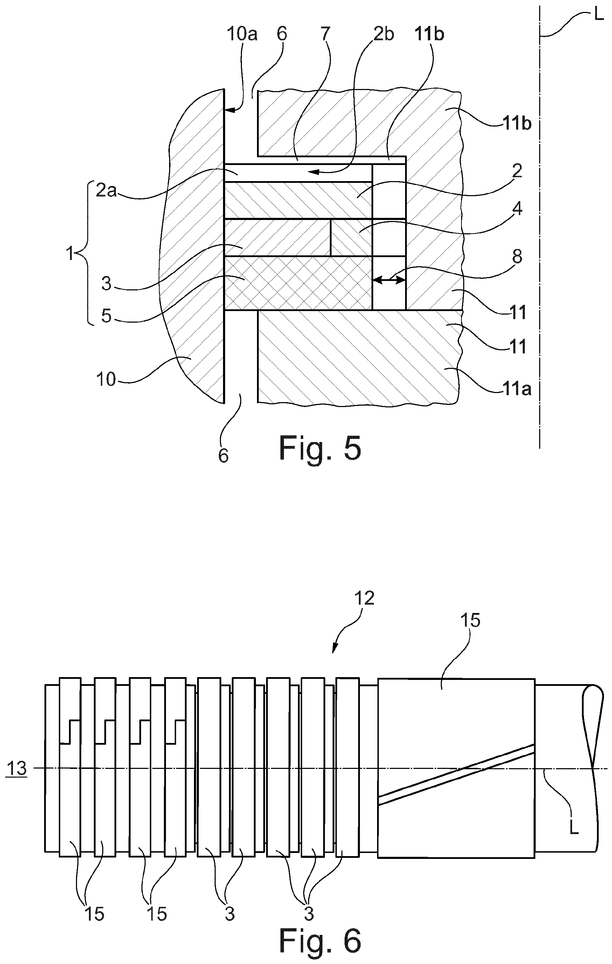

Im Neuzustand, das heisst bevor der Dichtring 3 während einer gewissen Dauer eingefahren wird, ist der Dichtring 3 derart ausgestaltet, dass dessen Dichtstirnseite 3e in radialer Richtung über die Deckringaussenseite 2c und die Grundringstirnseite 5a vorsteht, wie dies in Figur 1 dargestellt ist. Damit die Stütz- und Schutzwirkung von Deckring 2 und Grundring 5 für den Dichtring 3 möglichst gross ist, ist das Spiel zwischen Deckring 2 und/oder Grundring 5 und der Innenwand des Zylinder 10 bzw. der Zylinderbohrung 10a bevorzugt minimal gehalten. Im in Figur 1 dargestellten Ausführungsbeispiel ist der Aussendurchmesser von zumindest dem Deckring 2 und/oder dem Grundring 5 nur wenige Hundertstel Millimeter oder wenige Zehntel Millimeter kleiner als der Innendurchmesser der Zylinderbohrung 10a. Auf Grund der Erwärmung des Kolbenrings 1 während des Betriebs erfährt dieser eine Wärmdehnung. In einer vorteilhaften Ausgestaltung wächst der Aussendurchmesser des Deckrings 2 und/oder des Grundrings 5 auf einen Durchmesser gleich oder grösser als die Zylinderbohrung. Möchte der Aussendurchmesser von Grundring 5 und/oder Deckring 2 auf einen Durchmesser grösser als die Zylinderbohrung anwachsen, so hat dies zur Folge, dass der Deckring 2 und/oder der Grundring 5 während einer Einlaufphase an der Zylinderinnenwand 10a anstehen, und dabei an der aussenseitigen Stirnseite Material vom Deckring 2 und/oder von Grundring 5 abgetragen wird, so dass der Deckring 2 und/oder der Grundring 5 im betriebswarmen Zustand "spielfrei" in die Bohrung des Zylinders 10 passen. Damit während diesem Einlaufprozess nicht ein Klemmen von Deckring 2 und/oder Grundring 5 auftritt sind die zur Zylinderinnenwand 10 ausgerichteten Stirnseiten vorzugsweise zumindest teilweise sich erweiternd, vorzugsweise sich konisch erweiternd ausgestaltet, sodass nicht die gesamte Breite des Deckrings 2 und/oder des Grundrings 5 abgetragen werden muss, sondern nur derjenige Bereich, welcher ansonsten über die Zylinderinnenwand 10 vorstehen würde. Während der Einlaufphase wird zudem der Dichtring 3 an dessen Dichtstirnseite 3e abgetragen, sodass in einer bevorzugten Ausgestaltung und im erwärmten Zustand der Dichtring 3, der Deckring 2 sowie der Grundring 5 spielfrei in der Bohrung des Zylinders 10 angeordnet sind.
Auf eine konische Ausgestaltung der Deckringaussenseite 2c und/oder der Grundringstirnseite 5a kann jedoch auch, wie in Figur 5 dargestellt, verzichtet werden. Figur 5 zeigt einen Kolbenring 1 im eingelaufenen Zustand sowie während des Betriebs, das heisst im erwärmten Zustand. Der Deckring 2 und der Grundring 5 haben sich der Zylinderinnenwand 10a derart angepasst, dass sich diese im betriebswarmen Zustand spielfrei in Verlaufsrichtung der Längsachse L hin- und her bewegen. Zudem ist der Dichtring 3 derart angepasst, dass dieser in radialer Richtung nach aussen verschiebbar bzw. mit einer im Wesentlichen durch den Spannring 4 bestimmten Vorspannkraft zwischen Deckring 2 und Grundring 5 angeordnet ist, und reibend an der Zylinderinnenwand 10a anliegt.

Figur 6 zeigt in einer Seitenansicht ein Ausführungsbeispiel eines Kolbens 12, der ausgehend von der Hochdruckseite 13, eine Mehrzahl von in Längsrichtung L gegenseitig beabstandeten Dichtelementen aufweist, nämlich links vier gefangene Kolbenringe 15 und in Längsrichtung L nachfolgend fünf Kolbenringe 1. Zudem ist rechts noch ein Führungsring 15 angeordnet.

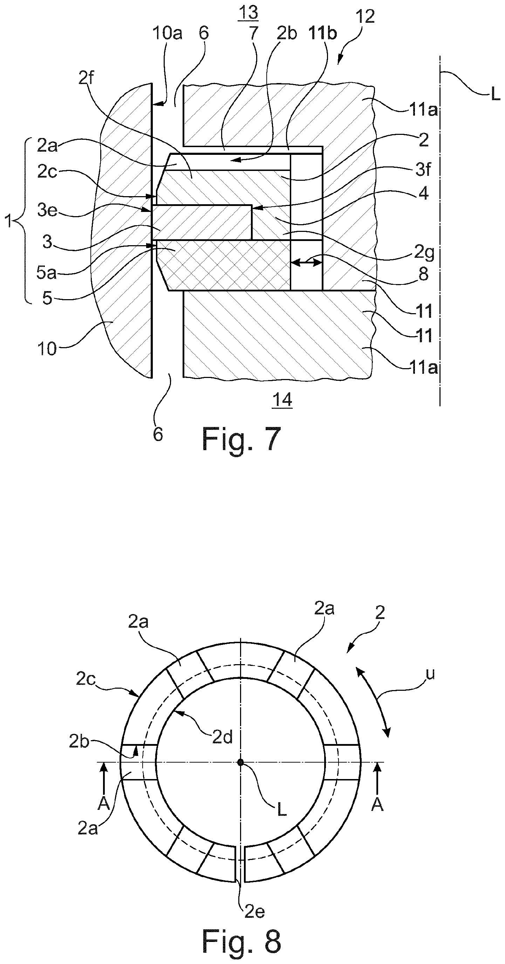

Figur 7 zeigt einen Längsschnitt eines dritten Ausführungsbeispiels einer Dichtungsanordnung 1. Figur 8 zeigt eine Draufsicht auf den in Figur 7 verwendeten Deckring 2. Der Deckring 2 weist, im Unterschied zum Ausführungsbeispiel gemäss der Figuren 1 und 2, einen radialen Schnitt 2e auf, und weist an dieser Stelle somit eine Stossstelle oder einen Spalt auf. Der Deckring 2 ist somit nicht mehr als endloser Deckring 2 ausgestaltet sondern als geschnittener Deckring 2. Zudem weist der Deckring 2, im Unterschied zum Ausführungsbeispiel gemäss der Figuren 1 und 2, einen L-förmigen Querschnitt auf, mit einem radial zur Längsachse L verlaufenden ersten Schenkel 2f und einem in Richtung der Längsachse L verlaufenden zweiten Schenkel 2g. Das Dichtelement 3 ist in radialer Richtung vor dem zweiten Schenkel 2g angeordnet, wobei der zweite Schenkel 2g vorzugsweise an der Dichtringinnenseite 3f des Dichtelements 3 anliegt. Der in radialer Richtung hinter dem Dichtelement 3 angeordnet zweite Schenkel 2g weist zudem die Eigenschaften eines Spannrings beziehungsweise einer Feder auf, und übernimmt somit die Funktion eines Spannrings beziehungsweise einer Feder. Die in radialer Richtung nach aussen auf das Dichtelement 3 wirkende Kraft wird erzeugt durch Federeigenschaften des Deckrings 2 und/oder durch den im Innenspalt 8 anliegenden, auf den Deckring 2 wirkenden Innendruck. Der einen radialen Schnitt 2e aufweisende Deckring 2 weist durch den radialen Schnitt 2e besonders ausgeprägte Eigenschaften eines Reibringes auf, wobei der Deckring 2 über den zweiten Schenkel 2g gleichzeitig eine in radialer Richtung nach Aussen wirkende Kraft auf das Dichtelement 3 bewirkt, sodass ein separater, wie in den Figuren 1 und 5 dargestellter Spannring 4 entfallen kann.

## Patentansprüche

1. Kolbenring umfassend einen endlosen Grundring (5) sowie einen Dichtring (3), wobei der Grundring (5) eine radial nach Aussen gerichtete Grundringstirnseite (5a) aufweist, und wobei der Dichtring (3) eine radial nach Aussen gerichtete Dichtstirnseite (3e) und eine radial nach innen gerichtete, kreisförmig verlaufende Dichtringinnenseite (3f) aufweist, wobei der endlose Grundring (5) und der Dichtring (3) in einer senkrecht zur Umfangsrichtung (U) verlaufenden Längsrichtung (L) nacheinander folgend angeordnet sind, **dadurch gekennzeichnet,**
**dass** der Dichtring (3) drei tangentiale Schnitte (3d) aufweist, welche sich tangential zur Dichtringinnenseite (3f) erstrecken, sodass der Dichtring (3) drei im einer Umfangsrichtung (U) nacheinander folgend angeordnete, durch den tangentialen Schnitt (3d) getrennte Dichtringsegmente (3a, 3b, 3c) umfasst, dass in Längsrichtung (L) anschliessend an den Dichtring (3) ein Deckring (2) angeordnet ist, dass der Deckring (2) eine radial nach Aussen gerichtete Deckringaussenseite (2c) und eine radial nach innen gerichtete Deckringinnenseite (2d) aufweist,
**dass** der Deckring (2) auf der dem Dichtring (3) abgewandten Seite zumindest einen radial verlaufenden Rückstromkanal (2a) aufweist, der sich in radialer Richtung entlang der gesamten Breite des Deckrings (2) erstreckt,
**dass** die Dichtstirnseite (3e) in radialer Richtung über die Deckringaussenseite (2c) und die Grundringstirnseite (5a) vorsteht,
und **dass** der Grundring (5) sowie der Deckring (2) eine höhere Zugfestigkeit aufweist als der Dichtring (3).

2. Kolbenring nach Anspruch 1, **dadurch gekennzeichnet, dass** der Deckring (2) als endloser Deckring (2) ausgestaltet ist.

3. Kolbenring nach Anspruch 1 oder 2, **dadurch gekennzeichnet, dass** ein Spannring (4) entlang der Dichtringinnenseite (3f) anliegt, und dass der Spannring (4) eine radial nach Aussen gerichtete Kraft auf die Dichtringinnenseite (3f) bewirkt.

4. Kolbenring nach Anspruch 1, **dadurch gekennzeichnet, dass** der Deckring (2) einen radialen Schnitt (2e) aufweist, dass der Deckring (2) einen L-förmigen Querschnitt aufweist mit einem radial zur Längsachse (L) verlaufenden ersten Schenkel (2f) und einem in Richtung der Längsachse (L) verlaufenden zweiten Schenkel (2g), wobei die Dichtringinnenseite (3f) des Dichtrings (3) zum zweiten Schenkel (2g) hin ausgerichtet ist.

5. Kolbenring nach einem der vorhergehenden Ansprüche , **dadurch gekennzeichnet, dass** die Zugfestigkeit des Grundrings (5) sowie des Deckrings (2) zumindest 1,5 Mal grösser ist als die Zugfestigkeit des Dichtrings (3).

6. Kolbenring nach einem der vorhergehenden Ansprüche, **dadurch gekennzeichnet, dass** der Dichtring (3) in Längsrichtung (L) eine Höhe im Bereich von 1 bis 6 mm aufweist.

7. Kolbenring nach einem der vorhergehenden Ansprüche, **dadurch gekennzeichnet, dass** die Grundringstirnseite (5a) und/oder die Deckringaussenseite (2c) sich ausgehend vom Dichtring (3) in axialer Richtung (L) verjüngt.

8. Kolbenring nach Anspruch 7, **dadurch gekennzeichnet, dass** sich die Grundringstirnseite (5a) und/oder die Deckringaussenseite (2c) in axialer Richtung (L) konisch verjüngt.

9. Kolbenverdichter umfassend einen Kolbenring (1) nach einem der vorhergehenden Ansprüche.

10. Kolbenverdichter nach Anspruch 9 umfassend einen Kolben (12) sowie einen Zylinder (10) mit einer Zylinderbohrung (10a), **dadurch gekennzeichnet, dass** der Grundring (5) und/oder der Deckring (2) einen Aussendurchmesser aufweist, der weniger als ein Zehntel Millimeter und vorzugsweise nur wenige Hundertstel Millimeter kleiner ist als der Innendurchmesser der Zylinderbohrung (10a).

11. Kolbenverdichter nach Anspruch 10, **dadurch gekennzeichnet, dass** der Grundring (5) und/oder der Deckring (2) im kalten Zustand einen derartigen Aussendurchmesser aufweisen, dass der Grundring (5) und/oder der Deckring (2) im erwärmten Zustand spielfrei im Zylinder (10) angeordnet ist.

12. Kolbenverdichter nach einem der Ansprüche 9 bis 11, umfassend einen Kolben (12) mit einem Kolbenkörper (11) und einer Mehrzahl von Kolbenringen (1), wobei der Kolbenkörper (11) eine Mehrzahl von in axialer Richtung (L) nacheinander folgend angeordnete Umfangsnuten (11b) aufweist, in welchen je ein Kolbenring (1) angeordnet ist, wobei die axiale Breite der Umfangsnut (11b) grösser ist als die axiale Gesamtbreite des Kolbenrings (1), und wobei der Kolbenring (1) auf der radial nach innen gerichteten Seite bezüglich dem Kolbenkörper (11) radial beabstandet angeordnet ist.

13. Verwendung des Kolbenrings gemäss einem der Ansprüche 1 bis 8 zum Komprimieren eines Fluides auf einen Druck von zwischen 500 bar und 1000 bar.

## Claims

1. A piston ring comprising an endless base ring (5) and a sealing ring (3), wherein the base ring (5) has a radially outwardly directed base ring face (5a), and wherein the sealing ring (3) has a radially outwardly directed sealing face (3e) and a radially inwardly directed, circular sealing ring inner side (3f), wherein the endless base ring (5) and the sealing ring (3) are arranged in succession in a longitudinal direction (L) perpendicular to the circumferential direction (U), **characterized in that** the sealing ring (3) has three tangential cuts (3d), which extend tangentially with respect to the sealing ring inner side (3f), with the result that the sealing ring (3) comprises three sealing ring segments (3a, 3b, 3c), which are arranged in succession in a circumferential direction (U) and which are separated by the tangential cut (3d), that a top ring (2) is arranged so as to adjoin the sealing ring (3) in the longitudinal direction (L), **in that** the top ring (2) has a radially outwardly directed top ring outer side (2c) and a radially inwardly directed top ring inner side (2d),
**in that** the top ring (2) has, on the side facing away from the sealing ring (3), at least one radially extending return flow channel (2a), which extends in the radial direction along the entire width of the top ring (2),
**in that** the sealing face (3e) protrudes in the radial direction beyond the top ring outer side (2c) and the base ring face (5a), and **in that** the base ring (5) and the top ring (2) have a higher tensile strength than the sealing ring (3).

2. The piston ring as claimed in claim 1, **characterized in that** the top ring (2) is designed as an endless top ring (2).

3. The piston ring as claimed in claim 1 or 2, **characterized in that** a clamping ring (4) makes contact along the sealing ring inner side (3f), and **in that** the clamping ring (4) brings about a radially outwardly directed force on the sealing ring inner side (3f).

4. The piston ring as claimed in claim 1, **characterized in that** the top ring (2) has a radial cut (2e), **in that** the top ring (2) has an L-shaped cross section with a first leg (2f) extending radially with respect to the longitudinal axis (L) and a second leg (2g) extending in the direction of the longitudinal axis (L), wherein the sealing ring inner side (3f) of the sealing ring (3) is oriented toward the second leg (2g).

5. The piston ring as claimed in any one of the preceding claims, **characterized in that** the tensile strength of the base ring (5) and of the top ring (2) is at least 1.5 times higher than the tensile strength of the sealing ring (3).

6. The piston ring as claimed in any one of the preceding claims, **characterized in that** the sealing ring (3) has a height in a range of from 1 to 6 mm in the longitudinal direction (L).

7. The piston ring as claimed in any one of the preceding claims, **characterized in that** the base ring face (5a) and/or the top ring outer side (2c) taper/tapers in the axial direction (L), starting from the sealing ring (3).

8. The piston ring as claimed in claim 7, **characterized in that** the base ring face (5a) and/or the top ring outer side (2c) taper/tapers conically in the axial direction (L).

9. A piston compressor comprising a piston ring (1) as claimed in any one of the preceding claims.

10. The piston compressor as claimed in claim 9 comprising a piston (12) and a cylinder (10) having a cylinder bore (10a), **characterized in that** the base ring (5) and/or the top ring (2) have/has an outside diameter which is less than one tenth of a millimeter and preferably only a few hundredths of a millimeter smaller than the inside diameter of the cylinder bore (10a).

11. The piston compressor as claimed in claim 10, **characterized in that** the base ring (5) and/or the top ring (2) have/has an outside diameter in the cold state such that the base ring (5) and/or the top ring (2) are/is arranged without clearance in the cylinder (10) in the heated state.

12. The piston compressor as claimed in any one of claims 9 to 11, comprising a piston (12) having a piston body (11) and a plurality of piston rings (1), wherein the piston body (11) has a plurality of circumferential grooves (11b), which are arranged in succession in the axial direction (L) and in each of which a piston ring (1) is arranged, wherein the axial width of the circumferential groove (11b) is greater than the total axial width of the piston ring (1), and wherein the piston ring (1) is arranged at a radial distance from the piston body (11) on the radially inwardly directed side.

13. The use of the piston ring as claimed in any one of claims 1 to 8 to compress a fluid to a pressure of between 500 bar and 1000 bar.

## Revendications

1. Segment de piston comprenant une bague de base (5) sans fin et une bague d'étanchéité (3), la bague de base (5) comportant un côté frontal (5a) de la bague de base qui est dirigé radialement vers l'extérieur, et la bague d'étanchéité (3) comportant un côté frontal (3e) de la bague d'étanchéité qui est dirigé radialement vers l'extérieur et un côté intérieur (3f) de la bague d'étanchéité qui s'étend circulairement et qui est orienté radialement vers l'intérieur,
la bague de base sans fin (5) et la bague d'étanchéité (3) étant disposées l'une à la suite de l'autre dans une direction longitudinale (L) s'étendant perpendiculairement à la direction circonférentielle (U),
**caractérisé en ce que**
la bague d'étanchéité (3) comporte trois découpes tangentielles (3d) qui s'étendent tangentiellement au côté intérieur (3f) de la bague d'étanchéité de sorte que la bague d'étanchéité (3) comporte trois segments (3a, 3b, 3c) disposés les uns à la suite des autres dans une direction circonférentielle (U) et séparés par la découpe tangentielle (3d),
une bague de recouvrement (2) est disposée dans la direction longitudinale (L) à la suite de la bague d'étanchéité (3),
la bague de recouvrement (2) comporte une bague de recouvrement extérieure (2c) dirigée radialement vers l'extérieur et une bague de recouvrement intérieure (2d) dirigée radialement vers l'intérieur,
la bague de recouvrement (2) comporte sur le côté opposé à la bague d'étanchéité (3) au moins un conduit de retour (2a) qui s'étend dans la direction radiale sur toute la largeur de la bague de recouvrement (2),
le côté d'étanchéité frontal (3e) fait saillie du côté extérieur (2c) de la bague de recouvrement et du côté frontal (5a) de la bague de base dans la direction radiale,
et la bague de base (5) et la bague de recouvrement (2) présentent une résistance à la traction supérieure à celle de la bague d'étanchéité (3).

2. Segment de piston selon la revendication 1, **caractérisé en ce que** la bague de recouvrement (2) est réalisée sous la forme d'une bague de recouvrement (2) sans fin.

3. Segment de piston selon la revendication 1 ou 2, **caractérisé en ce qu'**une bague de serrage (4) est en appui le long du côté intérieur (3f) de la bague d'étanchéité, et **en ce que** la bague de serrage (4) exerce une force radialement vers l'extérieur sur le côté intérieur (3f) de la bague d'étanchéité.

4. Segment de piston selon la revendication 1, **caractérisé en ce que** la bague de recouvrement (2) comporte une découpe radiale (2e), **en ce que** la bague de recouvrement (2) a une découpe transversale en forme de L pourvue d'une première branche (2f) s'étendant radialement à l'axe longitudinal (L) et d'une deuxième branche (2g) s'étendant dans la direction de l'axe longitudinal (L), la côté intérieur (3f) de la bague d'étanchéité (3) étant dirigé vers la deuxième branche (2g).

5. Segment de piston selon l'une des revendications précédentes, **caractérisé en ce que** la résistance à la traction de la bague de base (5) et de la bague de recouvrement (2) est au moins 1,5 fois supérieure à la résistance à la traction de la bague d'étanchéité (3).

6. Segment de piston selon l'une des revendications précédentes, **caractérisé en ce que** la bague d'étanchéité (3) a dans la direction longitudinale (L) une hauteur dans la gamme allant de 1 à 6 mm.

7. Segment de piston selon l'une des revendications précédentes, **caractérisé en ce que** le côté frontal (5a) de la bague de base et/ou le côté extérieur (2c) de la bague de recouvrement se rétrécit dans la direction axiale (L) en partant de la bague d'étanchéité (3).

8. Segment de piston selon la revendication 7, **caractérisé en ce que** le côté frontal (5a) de la bague de base et/ou le côté extérieur (2c) de la bague de recouvrement se rétrécit de manière conique dans la direction axiale (L).

9. Compresseur à piston comprenant un segment de piston (1) selon l'une des revendications précédentes.

10. Compresseur à piston selon la revendication 9 comprenant un piston (12) et un cylindre (10) pourvu d'un alésage de cylindre (10a), **caractérisé en ce que** la bague de base (5) et/ou la bague de recouvrement (2) ont un diamètre extérieur qui est inférieur de moins d'un dixième de millimètre et de préférence de seulement quelques centièmes de millimètre au diamètre intérieur de l'alésage (10a) du cylindre.

11. Compresseur à piston selon la revendication 10, **caractérisé en ce que** la bague de base (5) et/ou la bague de recouvrement (2) ont à l'état froid un diamètre extérieur tel que la bague de base (5) et/ou la bague de recouvrement (2) sont disposées à l'état chauffé sans jeu dans le cylindre (10).

12. Compresseur à piston selon l'une des revendications 9 à 11, comprenant un piston (12) pourvu d'un corps de piston (11) et une pluralité de segments de piston (1), le corps de piston (11) comportant une pluralité de rainures circonférentielles (11b) qui sont disposées les unes à la suite des autres dans la direction axiale (L) et dans chacune desquelles un segment de piston (1) est disposé, la largeur axiale de la rainure circonférentielle (11b) étant supérieure à la largeur axiale totale du segment de piston (1), et le segment de piston (1) étant disposé du côté dirigé radialement vers l'intérieur radialement à distance du corps de piston (11).

13. Utilisation du segment de piston selon l'une des revendications 1 à 8 pour comprimer un fluide à une pression comprise entre 500 bars et 1000 bars.
